# EUROPEAN PATENT APPLICATION

(11) **EP 1 953 439 A2**
(43) Date of publication of application: **06.08.2008**
(21) Application number: 08002005.0
(22) Date of filing: 04.02.2008
(51) Int. Cl.: F16L 21/00, F16L 3/12, F16L 7/00

(54) **An assembly for terminating a flexible water pipe**

(30) Priority: 03.02.2007 GB 0702100
(71) Applicant: Protube Ltd., Belfast BT119DS (IE)
(72) Inventor: Gilmore, Andrew, Castlewellan BT31 9UJ (IE); Muldoon, Michael, Blackstaff Road, Belfast BT11 9DS (IE)
(74) Representative: O'Neill, Brian

(57) **Abstract**

The present invention is concerned with an assembly for terminating a flexible water pipe (20) or the like and comprising a rigid housing (10) which defines a passage (12) therethrough having an entrance (14) and an exit (16), the assembly further comprising a rigid tube (18) which extends upward from the exit (16) of the passage (12), the housing (10) and tube (18) being adapted to receive the flexible water pipe (20) therein.

## Description

### Field of the invention

The present invention relates to an assembly for terminating a flexible water pipe, e.g. at a domestic hot water central heating radiator.

### Background of the invention

Plastics water pipes connecting a water boiler to a domestic radiator are often installed below the radiator, and are generally arranged to exit from below the radiator through holes provided in the floor. It is also known for plastics water pipes to be used as plumbing pipes connecting items of sanitary ware such as WC suites, baths, bidets wash hand basins and the like. Such arrangements of water pipes can be found in a wide variety of floors, such as in floors made from concrete, metal or timber.

A problem which arises using plastics water pipes is that, due to their inherent flexibility, they do not usually project from the floor at a 90° angle to the floor, and can therefore be considered to be unsightly. Also, because such water pipes are made of plastics, they are easily damaged.

One conventional solution to this problem is to terminate the plastics pipe beneath the floor at a connector. A conventional metal pipe is then connected to the other side of the connector, and this metal pipe projects upwardly from the floor at 90° to the floor. This arrangement, however, adds its own problems in that the connector provides two extra joints under the floor which are weak points in the water distribution system and can cause leaks. Fitting such a connector also increases the time taken to fit a particular feature such as a radiator, or sink or the like.

It is therefore an object of the present invention to mitigate one or more of the above-mentioned problems.

### Summary of the invention

According to the present invention there is provided an assembly for terminating a flexible water pipe, the assembly comprising a housing having an internal passage with an entrance and exit respectively at opposite ends of the passage; a tube extending from the passage exit; the passage and tube being arranged to accommodate a continuous length of flexible water pipe.

Preferably, the tube is substantially straight.

Preferably, the assembly comprises a cowl slidably mounted on the tube and locatable about the join between the housing and tube.

Preferably, the assembly comprises a sleeve slidably mounted on the tube.

Preferably, the exit is at substantially 90 degrees to the entrance.

Preferably, the passage entrance has an enlarged collar for receiving the end of a flexible conduit surrounding the pipe.

Preferably, the housing comprises means for mounting the housing on a surface.

Preferably, the housing comprises keying on an exterior thereof.

Preferably, the housing is formed from two halves.

Preferably, the housing defines a spigot at the exit which is shaped and dimension to receive the tube directly or indirectly thereon.

The invention further provides a kit of parts for making an assembly as specified in any of the preceding paragraphs.

In the present specification expressions of orientation such as top, bottom, horizontal, vertical, etc., are used for convenience and refer to the normal orientation of the assembly in use. Such expressions are not intended to be interpreted with mathematical precision.

### Brief description of the drawings

Embodiments of the present invention will now be described, by way of example, with reference to the accompanying drawings, in which:
Figure 1 is an exploded perspective view of an assembly according to a first embodiment of the invention.
Figure 2 is a cross-section through the assembly of Figure 1.
Figure 3 is a perspective cross-section of the assembly of Figure 1, showing a plastic pipe extending therethrough.
Figure 4 shows how a housing forming part of the assembly is made in two longitudinal parts fitted together.
Figures 5 shows how the assembly of Figures 1 to 4 is mounted in a solid concrete floor.
Figure 6 is a cross-sectional view of an assembly according to a second embodiment of the invention; and
Figure 7 is an exploded perspective view of the assembly illustrated in Figure 6.

### Detailed description of the invention

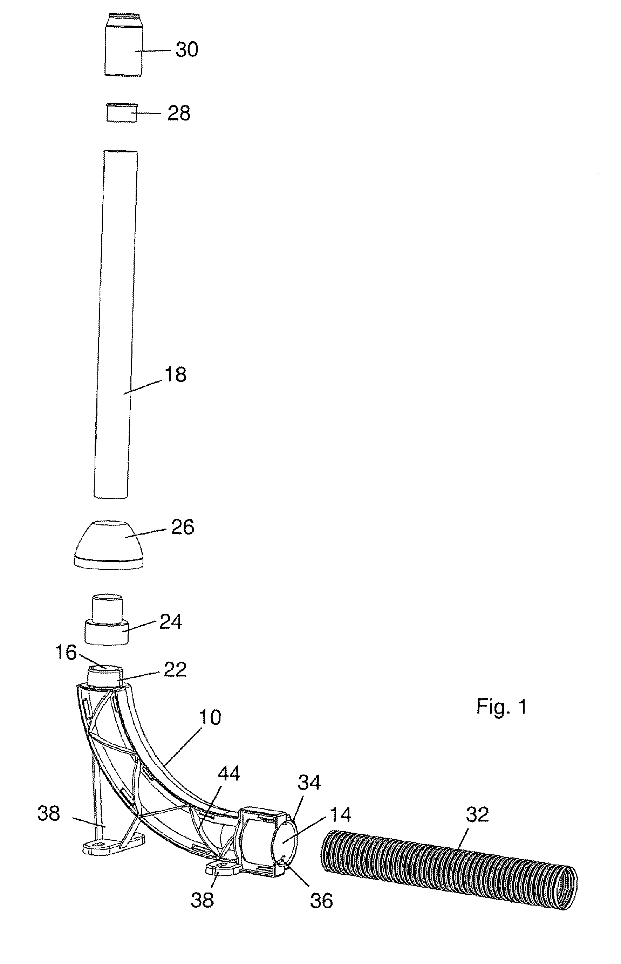

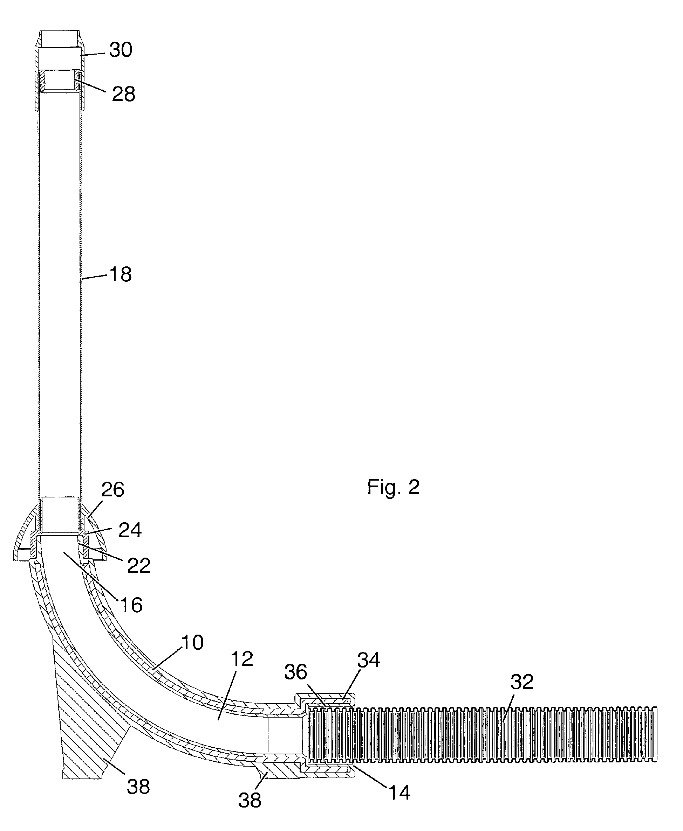

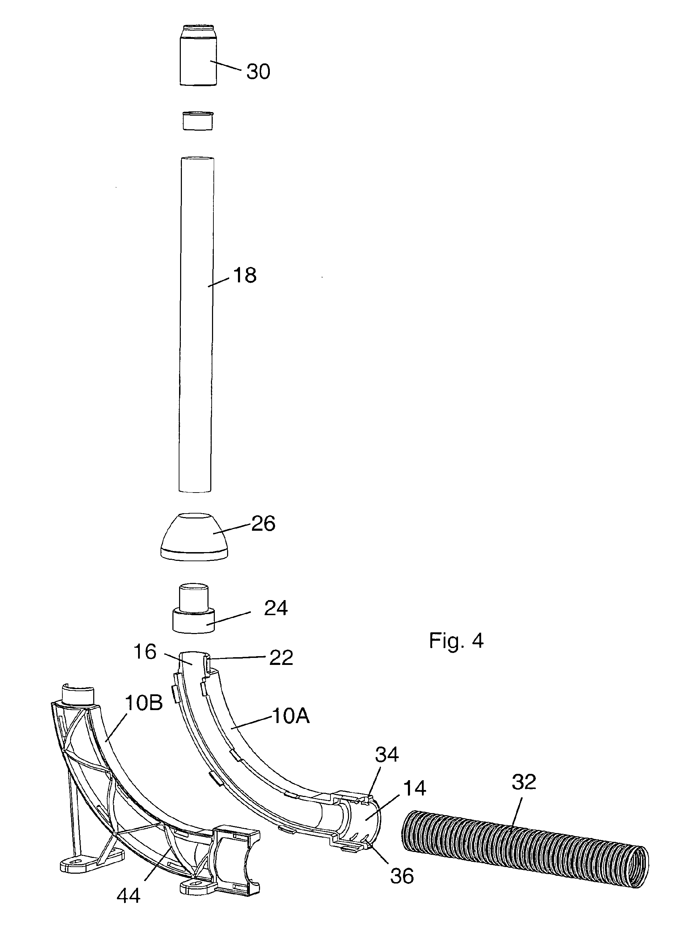

Referring to Figures 1 to 5 of the accompanying drawings, there is illustrated a first embodiment of an assembly for terminating a flexible water pipe according to the present invention. The assembly comprises a housing 10 defining an internal curved passage 12 having an entrance 14 and an exit 16 respectively at opposite ends of the passage 12. The exit 16 is substantially at 90 degrees to the entrance 14. It will however be appreciated from the following description of the invention that while in the preferred embodiment at angle of 90 degrees is chosen, this angle may be varied, for example to better suit a particular application of the invention. The housing 10 is formed or moulded in two parts 10A and 10B, Figure 4, which are snapped or otherwise secured together at the production machine before cooling. It will however be appreciated that the two parts 10A and 10B could be provided separate to one another to be fixed together just prior to or during installation of the assembly, as described in detail below.

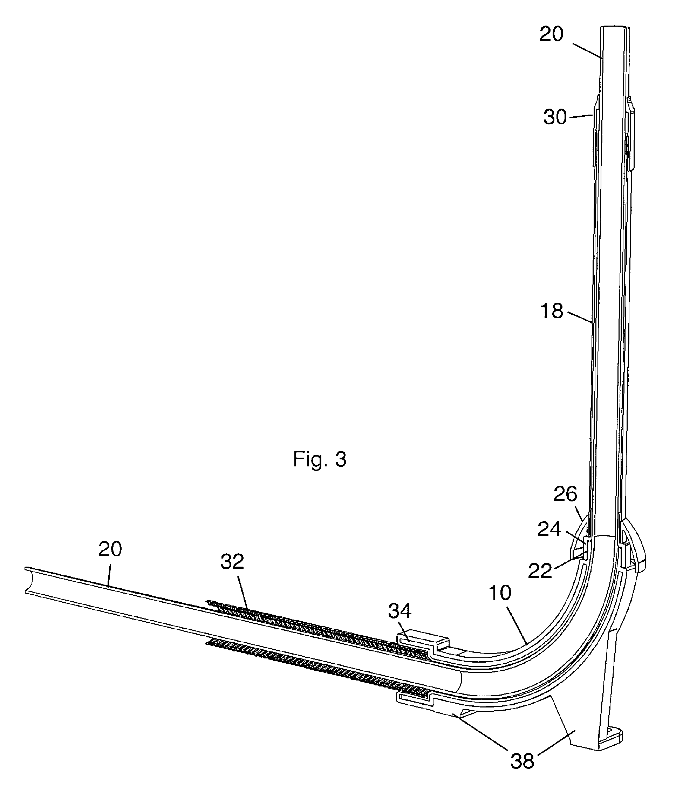

The assembly further comprises a substantially straight rigid tube 18 (herein referred to as a riser) extending from the passage exit 16, the curved passage 12 and riser 18 being arranged in use to accommodate a continuous length of flexible water pipe 20 (Figure 3) which enters the passage entrance 14 and emerges from the end of the riser 18 remote from the exit 16. Both the housing 10 and the riser 18 may be formed from any suitable material, for example plastic, and preferably polypropylene or similar.

The exit 16 of the passage 12 is defined by a tubular spigot 22 and the lower end of the riser 18 is mounted on the spigot 22 via a stepped collar 24 which engages over the spigot and assists in holding the two halves of the housing 10 together. A cowl in the form of a generally conical member (cone) 26 is slidably mounted on the riser 18 and serves to provide an aesthetically pleasing finish to the assembly where it projects form the floor, as will be described. It should be understood that the stepped collar 24 could be omitted, and the riser 18 fitted directly onto and around the spigot 22. In such an arrangement the riser 18 would then assist in holding the two halves 10A and 10B together. The halves could however be glued or otherwise permanently fixed together, or could be moulded as a single component.

A short tubular collar 28 may be inserted in the upper end of the riser 18 if the diameter of the pipe 20 is less than that of the riser 18, the wall thickness of the collar 28 being chosen according to the diameter of the pipe 20 so as to centre the pipe in the upper end of the riser. A sleeve in the form of a gaiter 30 is preferably slidably located over the upper end of the riser 18 to hide any exposed length of pipe 20, as will be described.

The present embodiment is primarily intended for use in pipe-in-pipe systems, wherein the flexible hot water pipe 20 is contained in a flexible concertina-like outer conduit 32. For this purpose the entrance 14 to the passage 12 is defined by an enlarged collar 34 for accommodating the end of the conduit 32. The inside surface of the collar 34 is preferably provided with a series of circumferential ribs 36 which engage the circumferential corrugations in the outer wall of the conduit 32. It will therefore be understood that if the assembly is to be used with a single pipe, for example the water pipe 20 without the outer conduit 32, the collar 34 could be omitted.

Finally, the housing 10 has mounting means in the form of an integral stand 38 for screw-mounting the housing 10 on a horizontal surface such that the passage entrance 14 is horizontal and the passage exit 16 and riser 18 are vertical, whereby the continuous length of flexible water pipe enters the passage entrance 14 horizontally and emerges vertically from the top end of the riser 18.

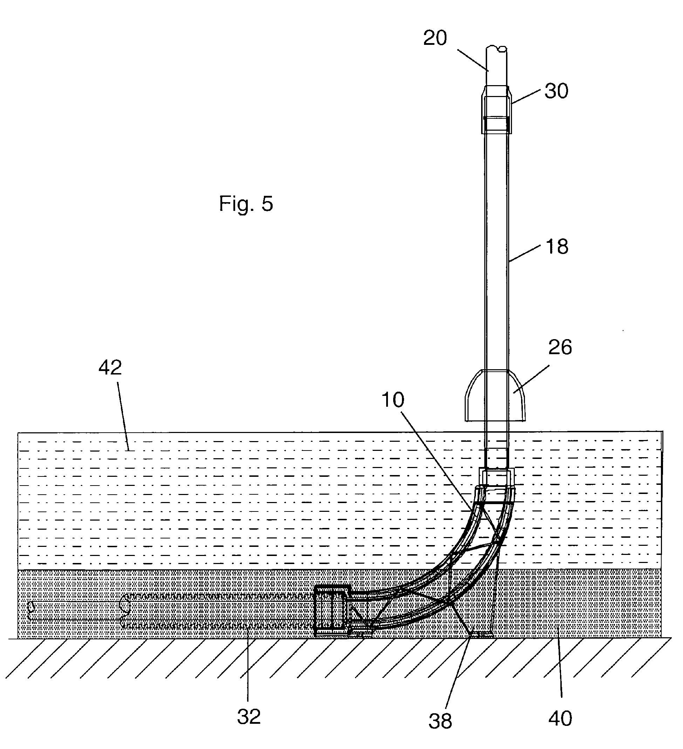

The embodiment described above is primarily intended for use in solid concrete floors. In such case the housing 10 is mounted by its stand 38 on a horizontal subfloor 40, Figure 5, and, with the conduit 32 terminating in the collar 34 and the pipe 20 passing through the passage 12 and emerging vertically from the top end of the riser 18, the housing 10 and lower end of the riser 18 are covered by the concrete floor 42. The cone 26 is slid up towards the top end of the riser 28 prior to the concrete floor 42 being laid, and is slid down against the surface of the concrete floor when the latter has set to provide an aesthetic finish where the riser emerges from the concrete floor. In Figure 5 it will be appreciated that the concrete floor 42 is cut away to reveal the assembly embedded therein. Keying in the form of external ribs 44 (Figure 1) on the housing 10 both provide rigidity to the housing and provide a key for the concrete forming the floor. In this way, when the wet concrete is initially poured and surrounds the housing 10 it will flow into the spaces between the ribs 44 and will then set. This creates an extremely secure bond between the concrete and the housing 10, preventing any unwanted movement and therefore misalignment of the housing 10.

The pipe 20 emerging from the top end of the riser 18 may be connected to a hot water radiator valve (not shown) or other water powered appliance in conventional fashion, the gaiter 30 being slid up against the bottom of the valve to cover any exposed length of pipe 20.

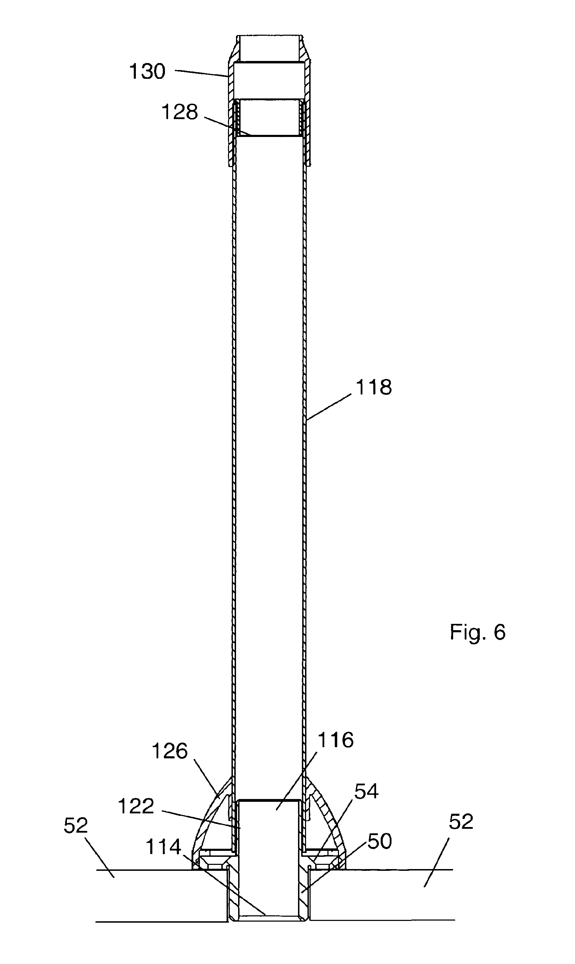

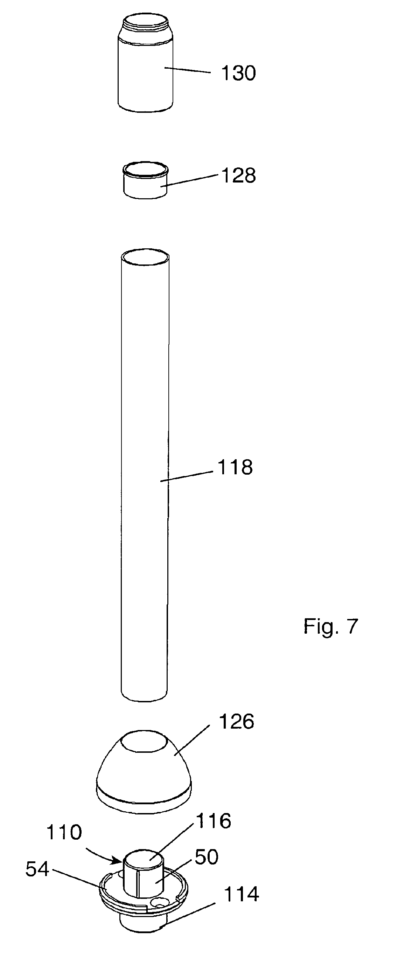

Referring now to Figures 6 and 7 there is illustrated a second embodiment of an assembly for terminating a flexible pipe according to the present invention. In this second embodiment like components have been accorded like reference numerals, and unless otherwise stated perform a like function. In this second embodiment the assembly is designed and adapted for fitting to a suspended floor 52 such as a conventional timber floor or floorboards. The assembly comprises a housing 110 which, unlike the housing 10 of the first embodiment, is a simple rigid tube 50 having an annular flange 54. The lower end of the tube 50, i.e. the part below the flange 54, is a snug fit in a hole drilled in the floor 52 and the flange 54 is screwed to the floor 52 in order to secure the housing 110 in place. The flange 54 serves to both prevent the excessive insertion of the tube 50 into the hole in the floor 52, and as mounting means for securing the housing 110 to the floor 52.

The housing 110 again defines an entrance 114 at a lower end and an exit 116 at an upper end, opposite to the entrance 114. In this embodiment the entrance 114 and the exit 116 are substantially inline with one another. The upper part of the tube 50 is equivalent to the spigot 22 of the housing 10 in the previous embodiment, although the stepped collar 24 is omitted from this second embodiment, and a riser 118 is therefore fitted directly onto the upper end of the tube 50. A cone 126 is again slidably mounted on the exterior of the riser 118 in the manner previously described.

In use a hole is drilled in the floor 52 corresponding in diameter to the tube 50, and the flexible water pipe (not shown) is fed through the hole from underneath the floor 52. The housing 110 is slid onto the free end of the water pipe and then advanced down the length of the exposed pipe until the lower end of the tube 50 is seated snugly in the hole drilled in the floor 52. The housing 110 is then preferably screwed to the floor via the screw holes provided. The cone 126 is then slid down over the housing 110 in order to hide the housing from view and provide a neat finish at floor level. The free end of the water pipe (not shown) may then be fixed to a radiator valve or the like, and a gaiter 130 slid upwardly to cover any exposed length of pipe.

Although not illustrated, it is to be understood that the housing 110 could be provided with an enlarged opening or collar (not shown) defining the entrance 114, in order to accommodate an outer conduit (not shown) surrounding the water pipe, as described and shown in the first embodiment.

The assembly of the present invention therefore provides a simply yet effective means of terminating a flexible water pipe or the like, for example at the connection to a water boiler or a domestic radiator.

## Claims

1. An assembly for terminating a flexible water pipe, the assembly comprising a housing having an internal passage with an entrance and exit respectively at opposite ends of the passage; a tube extending from the passage exit; the passage and tube being arranged to accommodate a continuous length of flexible water pipe.

2. An assembly according to claim 1 in which the tube is substantially straight.

3. An assembly according to claim 1 or 2 comprising a cowl slidably mounted on the tube and locatable about the join between the housing and tube.

4. An assembly according to any preceding claim comprising a sleeve slidably mounted on the tube.

5. An assembly according to any preceding claim in which the exit is at substantially 90 degrees to the entrance.

6. An assembly according to any preceding claim in which the passage entrance has an enlarged collar for receiving the end of a flexible conduit surrounding the pipe.

7. An assembly according to any preceding claim in which the housing comprises means for mounting the housing on a surface.

8. An assembly according to any preceding claim in which the housing comprises keying on an exterior thereof.

9. An assembly according to any preceding claim in which the housing is formed from two halves.

10. An assembly according to any preceding claim in which the housing defines a spigot at the exit which is shaped and dimension to receive the tube directly or indirectly thereon.
